Europäisches Patentamt

European Patent Office

Office européen des brevets

(19)

(11) Veröffentlichungsnummer: **0 143 317**
**A2**

(12) # EUROPÄISCHE PATENTANMELDUNG

(21) Anmeldenummer: **84112617.0**

(22) Anmeldetag: **19.10.84**

(51) Int. Cl.⁴: **G 06 F 11/00**

(30) Priorität: **29.10.83 DE 3339347**

(43) Veröffentlichungstag der Anmeldung: **05.06.85**
**Patentblatt 85/23**

(84) Benannte Vertragsstaaten: **AT BE CH DE FR GB IT LI LU NL SE**

(71) Anmelder: **STEAG AG,**
**Bismarckstrasse 54 Postfach 10 37 62,**
**D-4300 Essen1 (DE)**

(72) Erfinder: **Alichanow, Peter, Dipl.-Ing.,**
**Girardetstrasse 31, D-4300 Essen (DE)**

(54) Verfahren zur Überwachung einer speicherprogrammierbaren Steuerung auf zyklischem Betrieb.

(57) Die Erfindung betrifft ein Verfahren zur Überwachung einer speicherprogrammierbaren Steuerung (SPS) auf zyklischem Betrieb, bei dem an einem Ausgang der speicherprogrammierbaren Steuerung (SPS) für jeden Zyklus mindestens ein Zyklusimpuls erzeugt wird und die Zyklusimpulse der speicherprogrammierbaren Steuerung auf eine nachtriggerbare monostabile Kippstufe (MKS) geführt werden und deren Ausgangssignale auf eine Anzeige- und/oder Alarmeinrichtung (Kl, A) geführt werden.

Vorzugsweise ist die Zeitkonstante (R3, C3) der nachtriggerbaren monostabilen Kippstufe (MKS) zur Anpassung an verschiedene Zyklusimpulsfolgen veränderbar.

0143317

STEAG Aktiengesellschaft
Bismarckstraße 54
4300 Essen 1

Stichwort: <u>Zyklusüberwachung</u>

Verfahren zur Überwachung einer speicherprogrammierbaren Steuerung auf zyklischem Betrieb

Die Erfindung betrifft ein Verfahren zur Überwachung
einer speicherprogrammierbaren Steuerung auf zyklischem Betrieb.

Speicherprogrammierbare Steuerungen mit zyklischem
Betrieb werden zu vielen Einsatzzwecken verwendet.
In der Leittechnik moderner Kraftwerke finden solche
speicherprogrammierbaren Steuerungen ebenfalls vermehrt
Einsatz. Es besteht aber noch der Bedarf nach einer
einfachen Schaltung zur Überwachung dieser speicherprogrammierbaren Steuerungen auf zyklischem Betrieb.

Es ist daher die Aufgabe der vorliegenden Erfindung,
eine Schaltung zur Überwachung einer solchen speicherprogrammierbaren Steuerung auf zyklischem Betrieb
anzugeben.

Diese Aufgabe wird dadurch gelöst, daß die Zyklusimpulse der speicherprogrammierbaren Steuerung auf
eine nachtriggerbare monostabile Kippstufe geführt
sind und deren Ausgangssignal auf eine Anzeige- und/oder
Alarmeinrichtung geführt ist.

Ein vom Anwender der speicherprogrammierbaren Steuerung zu programmierendes Programm setzt einen Ausgang der speicherprogrammierbaren Steuerung bei jedem Zyklusdurchlauf mindestens einmal in seinen inversen Zustand. Dadurch entsteht an diesem Ausgang eine Rechteck-Impulsreihe, deren Impulsfolgefrequenz von der jeweiligen Gesamtlänge der in der Steuerung zu verarbeitenden Software abhängt. Ein Impulswechsel von logisch "O" auf die Zahl "1" bewirkt das Setzen des Ausgangs der nachtriggerbaren monostabilen Kippstufe auf "1" und den Start des Zeitraums, in dem eine Nachtriggerung durch einen Zyklusimpuls erfolgen kann. Erfolgt nach dem Ablauf der eingestellten Zeit kein erneuter Impulswechsel am Eingang der monostabilen Kippstufe, fällt der Ausgang zurück auf "O". Ein weiterer Impulswechsel am Eingang der monostabilen Kippstufe (Triggerimpuls) nach dem Start des eingestellten Zeitraums führt zu einem erneuten Starten des Zeitablaufs und zur Beibehaltung des momentanen Ausgangssignals der monostabilen Kippstufe. Im ungestörten zyklischen Betrieb der speicherprogrammierbaren Steuerung wird die monostabile Kippstufe immer vor Ablauf des eingestellten Zeitraums (Zeitfenster) nachgetriggert und der Ausgang der monostabilen Kippstufe bleibt immer im gleichen Zustand, nämlich logisch "1". Tritt ein Störfall auf, der durch einen Software- und/oder Hardwarefehler in der speicherprogrammierbaren Steuerung hervorgerufen werden kann, erfolgt keine Nachtriggerung und der Ausgang der monostabilen Kippstufe fällt auf logisch "O". Auf diese Weise ist eine einfache Überwachung einer speicherprogrammierbaren Steuerung auf zyklischen Betrieb möglich.

Vorzugsweise ist dem Ausgang der monostabilen Kippstufe ein Stromverstärker nachgeschaltet, der ein die Anzeige- und/oder Alarmeinrichtung auslösendes Relais ansteuert.

Um die erfindungsgemäße Schaltung für den Einsatz zur Überwachung verschiedener Zyklusimpulsfolgen aus speicherprogrammierbaren Steuerungen mit unterschiedlicher Programmlänge geeignet zu machen, ist es zweckmäßig, wenn die Zeitkonstante der nachtriggerbaren monostabilen Kippstufe zur Anpassung an verschiedene Zyklusimpulsfolgen veränderbar ist.

Die Erfindung betrifft auch eine Schaltung gemäß Anspruch 4.

Die erfindungsgemäße Schaltung soll nun anhand des beigefügten Blockschaltbilds in einer Ausführungsform näher erläutert werden.

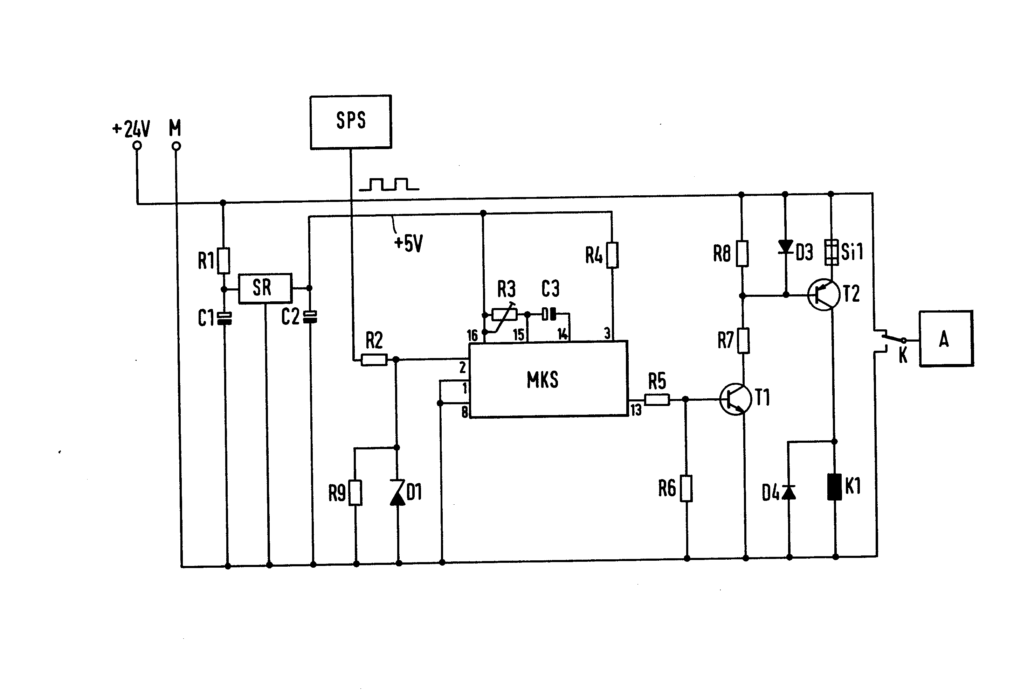

Die in der Figur gezeigte Schaltung ist für die in speicherprogrammierbaren Steuerungen üblicherweise verwendete Spannung von + 24 V ausgelegt. Andererseits sind die marktüblichen integrierten Schaltkreise auf eine Spannung von + 5 V ausgelegt. Daher ist in der erfindungsgemäßen Schaltung zunächst eine Unterbaugruppe zur Herabsetzung der Spannung von + 24 V auf + 5 V und zur Stabilisierung vorgesehen. Diese wird von einem in der Figur gezeigten Widerstand R1, Kondensatoren C1 und C2 und einem Spannungsregler SR aufgebaut, z. B. in Form des IC 7805 der Firma Texas Instruments.

Bei der gezeigten Ausführungsform wird als nachtriggerbare monostabile Kippstufe MKS der integrierte Schaltkreis 74 LS 123 der Firma Siemens eingesetzt. Über einen Widerstand R2 werden auf den Eingang 2 der MKS die Zyklusimpulse einer speicherprogrammierbaren Steuerung SPS geführt, wie dies in der Figur durch die rechteckige Impulsfolge dargestellt ist. Die SPS ist z. B. so programmiert, daß an einem Ausgang pro Zyklus ein Impuls ansteht. Die SPS kann z. B. die Steuerung S5 der Firma Siemens sein. Der Spannungspegel am Eingang 2 ist durch eine Zehnerdiode D1 und einem zu ihr parallel liegenden Widerstand R9 bestimmt. Die Eingänge 1 und 8 der MKS liegen an Masse M.

Zwischen dem Spannungspegel + 5 V und den Eingängen 16,15 und 14 der MKS liegt ein Potentiometer R3 und ein Kondensator C3 in der aus der Figur ersichtlichen Beschaltung. Die Schaltelemente R3 und C3 dienen dem Einstellen der Zeitkonstanten der monostabilen Kippstufe und somit der Anpassung des Nachtriggerzeitpunktes an die Impulsfolgefrequenz der einlaufenden Zyklusimpulsreihe der zu überwachenden SPS.

Zwischen dem Spannungspegel + 5 V und dem Pin 3 liegt ein Widerstand R4. Der Ausgangspin 13 der MKS ist über eine Spannungsteilerschaltung, bestehend aus den Widerständen R5 und R6, mit einer Stromverstärkungsschaltung aus den Transistoren T1 und T2 verbunden. Der Kollektor des Transistors T1 liegt über einer Spannungsteilerschaltung, bestehend aus den Widerständen R7 und R8, an + 24 V. Die Basis des Transistors liegt an dem Verbindungspunkt des Spannungsteilers R7,R8 und ist weiterhin über eine Diode D3 mit dem Spannungspegel + 24 V verbunden. Zwischen diesem Pegel und dem Emitter liegt eine Sicherung Si1 und zwischen Kollektor und Masse M dieses Transistors T2 liegt eine Parallelschaltung einer Diode D4 und eines Relais K1.

Zwischen dem Pegel + 24 V und Masse liegt ein Wechselkontakt K des Relais K1 derart, daß ein Abfall des nachgetriggerten Ausgangsimpulses der monostabilen Kippstufe MKS als Spannungswechsel an dem Wechselkontakt K erfaßt werden kann. Dieser Spannungswechsel wird von einer Anzeigeeinrichtung A erfaßt, die von üblicher Bauart sein kann.

1

STEAG Aktiengesellschaft
Bismarckstraße 54
4300 Essen 1

Stichwort: Zyklusüberwachung

Verfahren zur Überwachung einer speicherprogrammierbaren Steuerung auf zyklischem Betrieb

A n s p r ü c h e

1. Verfahren zur Überwachung einer speicherprogrammierbaren Steuerung auf zyklischem Betrieb,
dadurch gekennzeichnet, daß an einem Ausgang der speicherprogrammierbaren
Steuerung (SPS) für jeden Zyklus mindestens ein
Zyklusimpuls erzeugt wird und daß die Zyklusimpulse
der speicherprogrammierbaren Steuerung auf eine
nachtriggerbare monostabile Kippstufe (MKS) geführt
werden und deren Ausgangssignale auf eine Anzeige-
und/oder Alarmeinrichtung (K1,A) geführt werden.

2. Verfahren nach Anspruch 1,
dadurch gekennzeichnet, daß der monostabilen Kippstufe (MKS) ein Stromverstärker (T1,T2) nachgeschaltet ist, der ein
Relais (K1) ansteuert.

3. Verfahren nach Anspruch 1 oder 2,
dadurch gekennzeichnet, daß die Zeitkonstante (R3,C3) der nachtriggerbaren monostabilen Kippstufe (MKS) zur Anpassung
an verschiedene Zyklusimpulsfolgen veränderbar ist.

4. Schaltung zur Durchführung des Verfahrens nach einem der Ansprüche 1 - 3, dadurch gekennzeichnet, daß einem Zyklusimpulsausgang der speicherprogrammierbaren Steuerung (SPS) eine nachtriggerbare monostabile Kippstufe (MKS) nachgeschaltet ist und dieser eine Anzeige- und/oder Alarmeinrichtung (Kl,A) nachgeschaltet ist.